# EUROPEAN PATENT SPECIFICATION

(11) **EP 4 162 455 B1**
(45) Date of publication and mention of the grant of the patent: **18.11.2026**
(21) Application number: 21816777.3
(22) Date of filing: 28.05.2021
(51) Int. Cl.: G08B 7/06, H04L 12/10, G08B 13/196, H04N 7/18, H04N 5/33, H04N 23/75, H04R 1/02, H04R 27/00

(54) **INTERNET PROTOCOL (IP)-SPEAKER WITH IP-CAMERA**
INTERNETPROTOKOLLLAUTSPRECHER MIT IP-KAMERA
HAUT-PARLEUR À PROTOCOLE INTERNET (IP) AVEC CAMÉRA IP

(30) Priority: 03.06.2020 US 202063033871 P
(43) Date of publication of application: 12.04.2023
(73) Proprietor: Hubbell Incorporated, Shelton, CT 06484-1000 (US)
(72) Inventor: REID, Jeffrey, Sinking Spring, PA 19608 (US); DEIHM, Roger, Mohnton, PA 19540 (US); PENNY, John J., Mohnton, PA 19540 (US)
(74) Representative: Staeger & Sperling Partnerschaftsgesellschaft mbB
(86) International application number: PCT/US2021/034796
(87) International publication number: WO 2021/247400

(56) References cited:
- EP-A2- 1 881 687
- WO-A1-2019/035948
- WO-A1-2020/076363
- US-A1- 2006 287 746
- US-A1- 2013 045 763
- US-A1- 2013 273 869
- US-A1- 2018 219 976
- US-A1- 2018 332 384
- US-A1- 2019 347 916
- US-A1- 2020 020 213
- MESNIK BOB: "How IP Powered Speakers Work", KINTRONICS, 5 May 2017 (2017-05-05), XP055880162, Retrieved from the Internet <URL:https://kintronics.com/ip-powered-speakers-work>

## Description

### BACKGROUND

### Field:

Illustrative embodiments relate generally to an internet protocol (IP)-based ceiling or wall-mounted speaker with optional IP-based camera and/or alarm indicator. Illustrative embodiments also relate generally to an internet protocol (IP)-based speaker having a detachable add-on device for accommodating different types of camera configurations and other components.

### Description of Related Art:

Commercial speakers are used in commercial settings, industrial settings, or other relatively large places with need for output of announcements, pages, alarms, and the like, to people in these settings. Speakers are generally distributed throughout a facility or other areas, and particularly when the facility has several different levels or floors, to ensure people are within the output range of a speaker(s). Speaker installations therefore can be costly due to the cost per speaker and the number of speakers needed to provide adequate announcement/alarm coverage.

Different speakers and aspects of speakers are in addition known for example from WO 2019/035948 A1, US 2018/332384 A1, WO 2020/076363 A1, US 2013/045763 A1 and US 2019/347916 A1.

### SUMMARY

An IP-based ceiling or wall-mounted speaker is provided in accordance with different illustrative embodiments. According to the invention a speaker as defined by the features of claim 1 as well as a speaker as defined by the features of claim 9 are provided.

Additional and/or other aspects and advantages of illustrative embodiments will be set forth in the description that follows, or will be apparent from the description, or may be learned by practice of the illustrative embodiments. The illustrative embodiments may comprise apparatuses and methods for operating same having one or more of the above aspects, and/or one or more of the features and combinations thereof. The illustrative embodiments may comprise one or more of the features and/or combinations of the above aspects as recited, for example, in the attached claims

### BRIEF DESCRIPTION OF THE DRAWINGS

The above and/or other aspects and advantages of embodiments of the illustrative embodiments will be more readily appreciated from the following detailed description, taken in conjunction with the accompanying drawings, of which:
Figs. 1A and 1B are perspective views of an example IP-based speaker in accordance with an illustrative embodiment;
Figs. 2A and 2B are front and side views, respectively, of the IP-based speaker in Figs. 1A and 1B;
Figs. 3A, 3B, 4 and 5 are perspective views of example IP-based speakers in accordance with another illustrative embodiment;
Figs. 6A and 6B are block diagrams of components of an IP-based speaker in accordance with an illustrative embodiment;
Fig. 7 is a diagram of IP-based speakers connected to an IP device in accordance with an illustrative embodiment;
Fig. 8 is a diagram of IP-based speakers connected to an IP device and providing rebroadcasts in accordance with an illustrative embodiment;
Fig. 9 is a diagram of IP-based speakers connected to an IP device and to a remote call button device in accordance with an illustrative embodiment; and
Fig. 10 is an exploded view of an example IP-based speaker with infrared (IR) camera and switchable IR filter in accordance with an illustrative embodiment.

Throughout the drawing figures, like reference numbers will be understood to refer to like elements, features and structures.

### DETAILED DESCRIPTION OF ILLUSTRATIVE EMBODIMENTS

Reference will now be made in detail to illustrative embodiments, which are depicted in the accompanying drawings. The embodiments described herein exemplify, but do not limit, the illustrative embodiments by referring to the drawings.

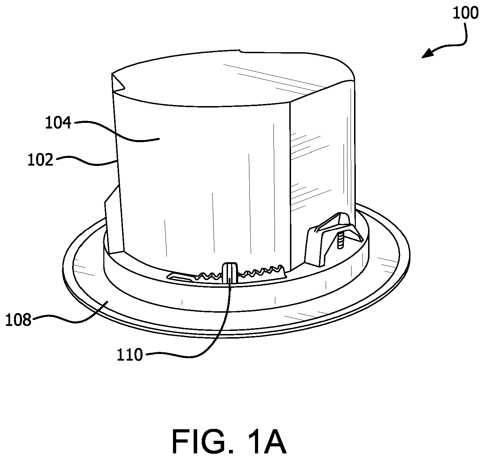

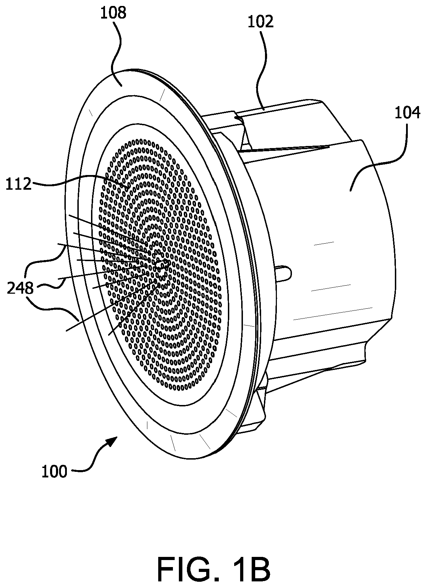

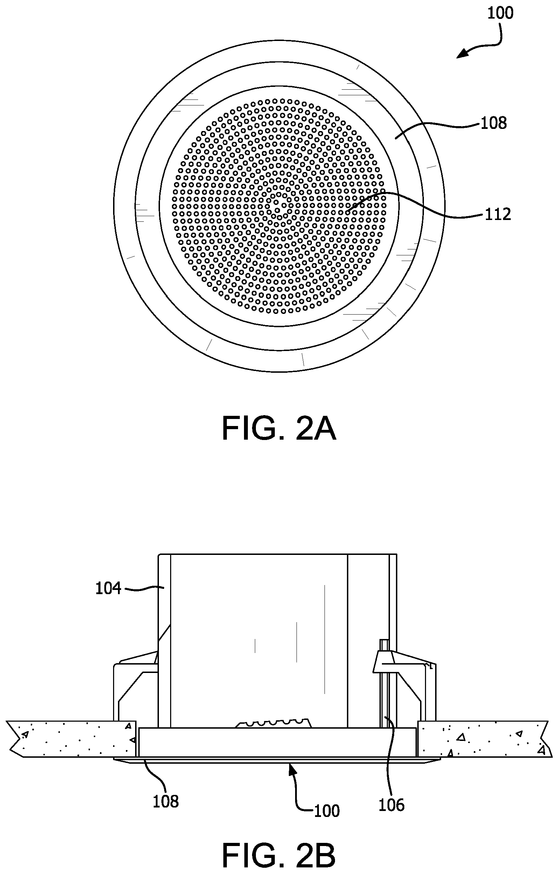

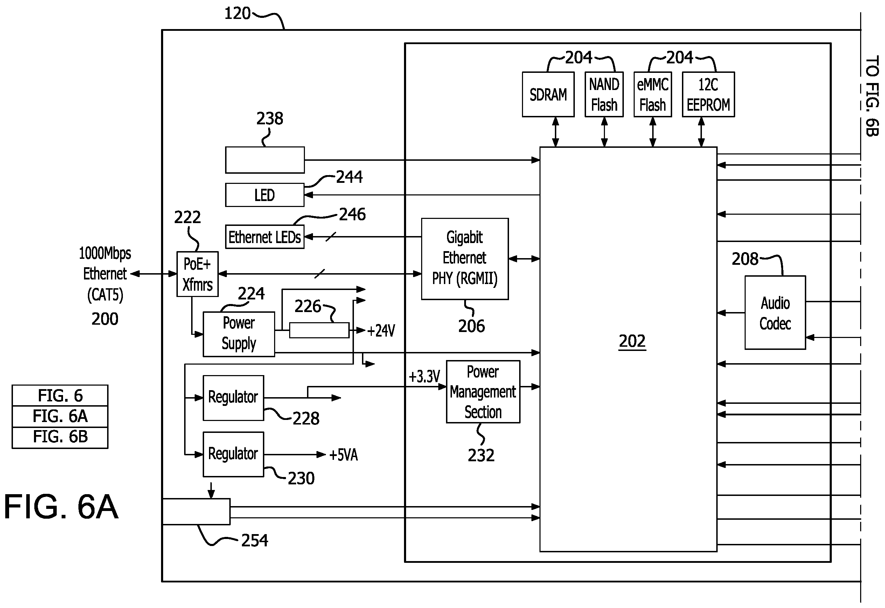

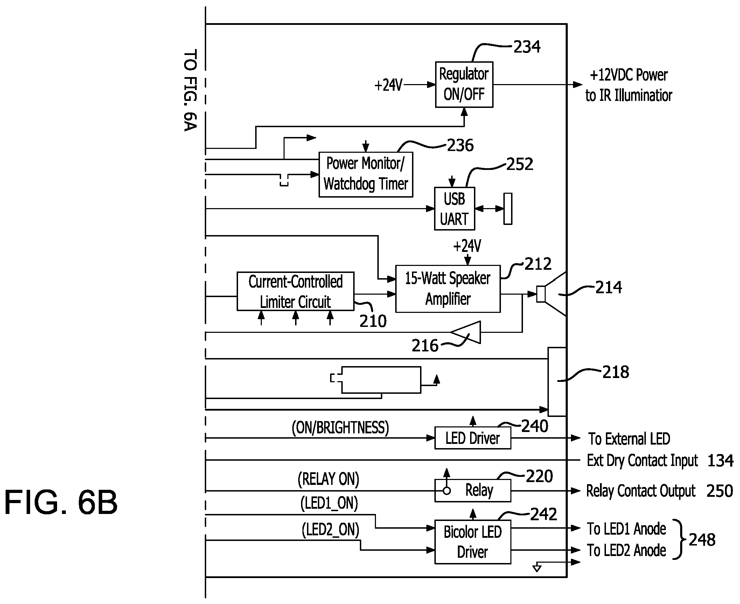

Figs. 1A and 1B illustrate perspective views of an example IP-based speaker 100 configured in accordance with an illustrative embodiment, and Figs. 2A and 2B are front and side views, respectively, of the speaker 100 in Figs. 1A and 1B. The speaker 100 comprises a housing 102 which can be made of molded plastic or other material that encloses speaker assembly components such as those illustrated in Figs. 6A and 6B as described below in accordance with illustrative embodiments. The speaker housing 102 can be constructed similarly to the housing of a B-650(T) speaker, for example, which is commercially available from DNH A/S, Kragerø, Norway. The speaker housing 102 is configured for mounting into a recess in ceiling or wall surface, for example. The housing 10 has a main section 104 enclosing most of the speaker components and a removable cover 108. The main section 104 can be installed through an opening in the ceiling or wall surface and secured in place against the surface via one or more screws received in mounting brackets or fasteners 106. The cover 108 is removably secured to the main housing 104 via clips 110 to optionally expose the interior of the main housing when removed therefrom, and to otherwise present a grill 112 when attached to the main housing 104. It is to be understood, however, that the speaker 100 can have a housing form factor wherein the speaker is flush mounted to a ceiling or wall surface.

With reference to Figs. 1B, 2A and 3B, at least a portion of the front surface of the speaker 100 comprises a grill 112 with plural openings that facilitate output of sound from a loudspeaker 214 (Fig. 6B) provided within the housing 102. The openings also allow a user to see light output from an alarm LED 248 provided on a speaker control board 120 (Fig. 6A) mounted within the housing 102.

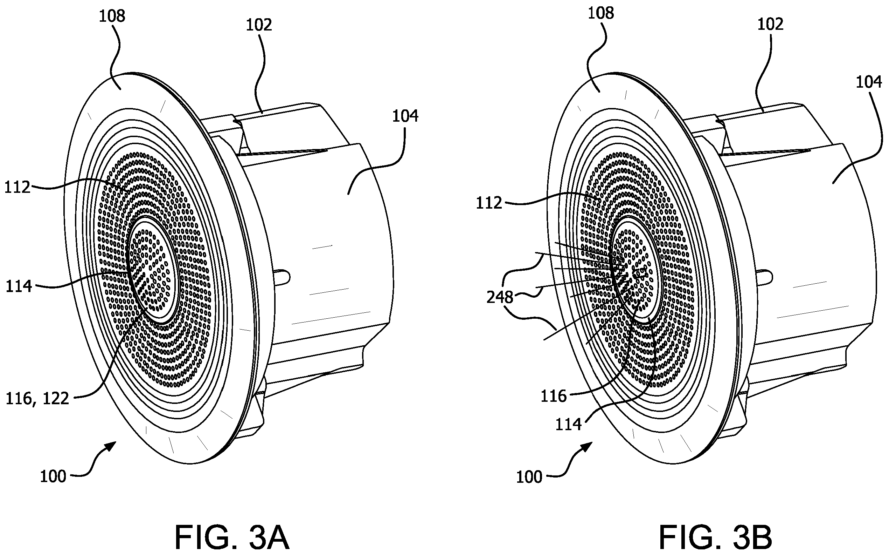

With reference to Figs. 3A, 3B, 4 and 5, and in accordance with other example embodiments, the speaker 100 can be alternatively configured to have an opening 114 that receives an optional add-on device 116 such as a camera, LED device or other device, or simply a cover for the opening 114. For example, the main section 104 of the housing 102 can have a recess therein that is sufficient to receive a least a portion of an add-on device 116. The removable cover 108 can have the opening 114, which is dimensioned to receive the add-on device 116. For example, the opening 114 can be 2" inches in diameter and or other diameter that is smaller than the diameter of the cover 108.

The add-on device 116 has a pluggable electrical interface between the add-on device 116 and the control board 120 in the speaker main housing section 104. For example, the add-on device 116 can have a flexible cable or ribbon cable electrically connected thereto at one end thereof that has an electrical plug or connector provided at the other end thereof for electrical connection to the control board 120. The flexible cable or ribbon cable is configured to be disposed within the recess of the main section 104 of the housing 102 following assembly with the add-on device 116, and to have sufficient length to allow the add-on device 116 to be rotated relative to the control board 120 without disconnecting the electrical plug or connector from the control board 120. The electrical plug or connector of the add-on device 116 is electrically connected to a cooperating connector associated with the control board 120 to provide electrical power from the control board 120 to the add-on device 116's components, and to allow exchange of inputs, outputs and/or control signals between the speaker control board 120 and the add-on device 116. For example, the add-on device 116 can have a pressure fit connector that electrically connects to a plug on the board 120 when the add-on device 116 is installed in the speaker, and that is released from the plug upon application of a sufficient force that separates the add-on device 116 from the speaker 100. The opening 114 and the add-on device 116 can be provided with cooperating mounting features that allow detachment of the add-on device 116 from the opening 114. For example, the opening 114 can be provided with a helical groove along an inner circumferential surface thereof that cooperates with a screw thread provided along an exterior surface of the add-on device 116. Alternatively, pressure mounted clips can be used to detachably mount an add-on device 116 within the opening 114 of the speaker 100. In an alternative embodiment, the add-on device 116 is integral or otherwise connected to control board 120 and related components in a single sub-assembly that rotates relative to the main section 104 of the housing 102.

With reference to Figs. 3A and 3B, the add-on device 114 is a cover 122 having a grill pattern similar to the grill 12. As shown in Fig. 3B, an LED is visible through the add-on device 116. For example, the LED can be part of the speaker control board 120, in which case the LED can be visible through the grill 112 in the embodiment of the speaker 100 shown in Figs. 1B and 2A, or through the add-on device 116 shown in Figs. 3A and 3B. It is to be understood that placement of the LED within the housing 102 is not limited to viewing from the center of the housing 102 front or opening 114 and can instead be visible from a peripheral location within the speaker housing 102. Also, the LED can be part of the speaker control board 120 or the add-on device 116 in accordance with example embodiments. In accordance with another example embodiment, the speaker 100 can be provided with an LED and the add-on device 116 can have another LED.

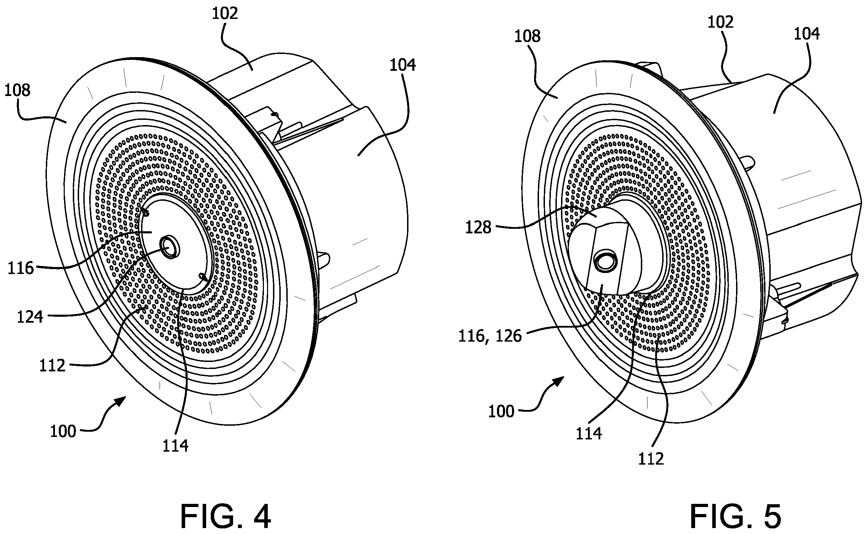

As shown in Fig. 4, the add-on device 116 comprises a flush mount camera 124 having a lens providing a field of view that is parallel with the longitudinal axis of the housing 102. In Fig. 5, the add-on device 116 has a housing structure 128 (e.g., a dome-like structure) that extends away from the cover 108 enclosing a camera 126 with a lens that provides an angled field of view with respect to the longitudinal axis of the housing 102. The housing structure 128 can be configured to rotate relative to the add-on device 116 housing or otherwise relative to the speaker 100 to allow set up of a camera to a desired field of view. The housing structure 128 can be translucent to allow a user in the vicinity of the speaker to see output from one or more LEDs or other visual indicator(s) provided in the add-on device 116 such as a fire alarm that flashes.

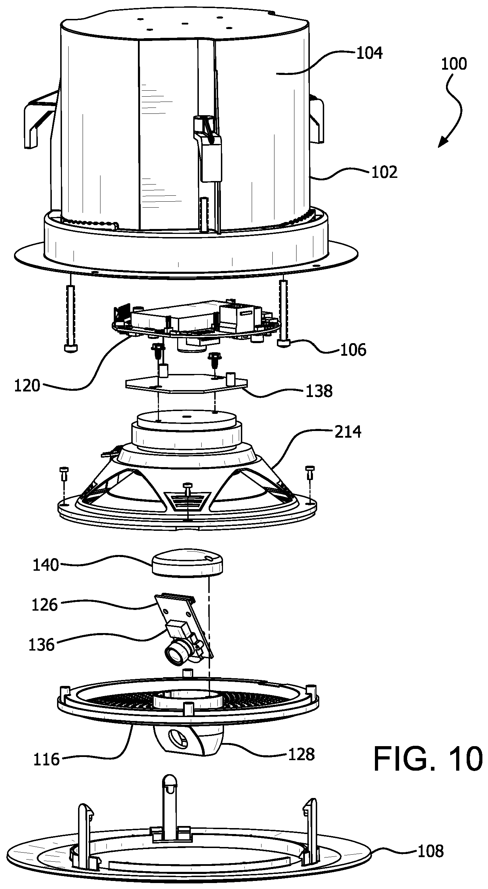

In accordance with another example embodiment and with reference to Fig. 10, the add-on device 116 comprises an infrared (IR) camera 126 to provide day-time and night-time images (e.g., for security applications) for a selected area in the field of view of the camera. The IR camera can have a switchable electromagnetic filter to automatically switch an IR filter from being in front of the camera to pass only visible light, to being away from the camera when the camera senses image quality degradation from insufficient visible light to output IR images instead. The dome 128 can be swiveled for desired angle and field of view. For example, the automatically switchable IR filter 138 can be operated by the camera 126 to block IR and pass visible light when camera image quality is determined to meet criteria for day-time image capture operation, and to not block IR when camera image quality is determined to meet criteria for night-time image capture operation. The IR camera 126 with switchable IR filter 136 can be accommodated in a dome 128. The dome 128 is dimensioned in terms of length and diameter and look-down face angle to accommodate an IR camera, which can have a comparatively larger form factor than regular visible spectrum only camera because of the IR filter 138. The add-on device 116 with IR camera 126 can be provided with a cap 140. The cap 140 is beneficial to reduce any acoustical anomalies occurring in the cavity of the camera dome 128 on the frequency response of the speaker 214 output. The IR camera add-on 116 can have a ribbon connection or other electrical interface (not shown) with the speaker control board 120 to send images via Ethernet to IP endpoint device 130 and to optionally receive power. The IR camera 126 is indicated as installed as a pluggable add-on device 116; however, it can also be mounted integrally to the speaker 100.

As described below in connection with Figs. 6, 7, 8 and 9, the speaker 100 provides an Ethernet connection to an amplifier and loudspeaker, and is IP addressable to operate with other IP device(s) 130 connected via Ethernet (e.g., optic cable or CAT5 cable) to provide one-way and/or two-way IP communications. For example, the IP devices 130 can be IP end units (e.g., a HUBBCOM^{™} IP device, or Elemec3 Networked Public Address and General Alarm System (PA/GA) controller commercially available from GAI-Tronics, Reading, Pennsylvania) and a SIP server for two-way IP communications, and an optional video switch for one-way IP communications. As described below, the Ethernet connection provides bi-directional audio between the speakers 100 and the IP devices 130 and optional unidirectional video from a speaker(s) 100 with a camera to a video switch 130. Regardless of the type of IP device 130 used, an IP device 130 and one or more speakers 100 are configured in accordance with example embodiments to allow the IP device 130 to send digitized audio to the speakers 100 for pages and public address (PA) announcements. The speakers 100 are powered via PoE / PoE+, and can be configured as addressable individually, as a zoned unit, and/or as an all-page unit with respect to an IP device 130.

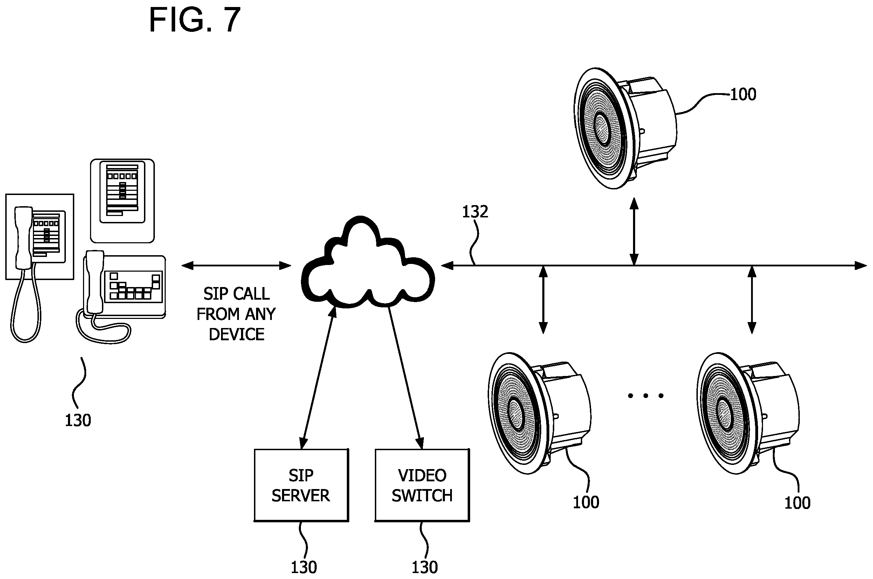

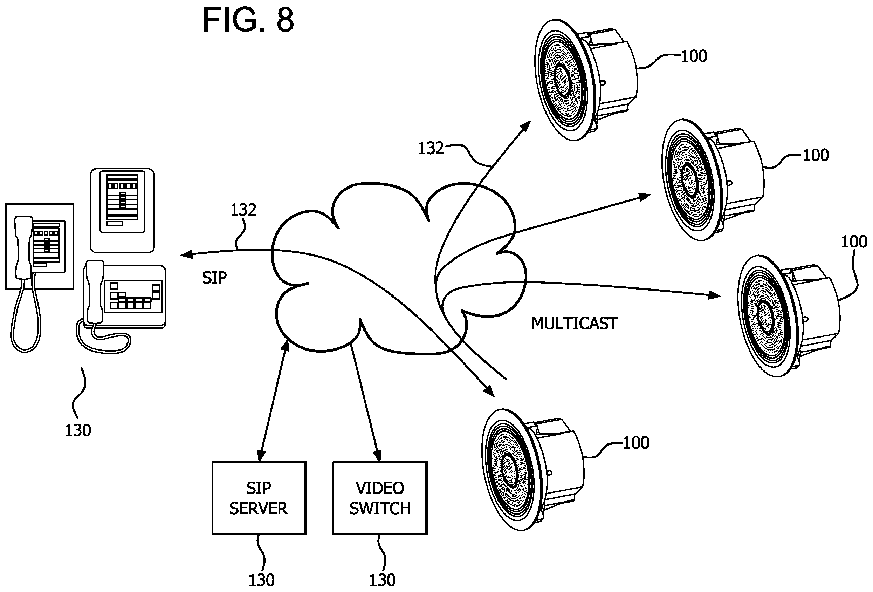

Fig. 7 depicts an example multi-Function IP endpoint device 130 available from GAI-Tronics and SIP server 130 that can be programmed to send pages, alarms, other announcements to speakers 100 that are connected via multicast technology, as well as to receive audio via a talkback function of the speaker(s) 100. In addition, when used in connection with a video surveillance system, speakers 100 can provide video to an optional video switch 130, Speakers 100 are provided with IP addresses and IP device(s) 130 can address pages/announcements to zones of speakers. For example, speakers 100 can be configured to be addressed in different zones whereby different speaker 100 identifiers are associated with one or more zone identifiers assigned to respective zones in an area or building where the speakers 100 are deployed. In addition, each speaker 100 can be configured to rebroadcast audio output to other IP devices using the multicast technology as depicted in Fig. 8.

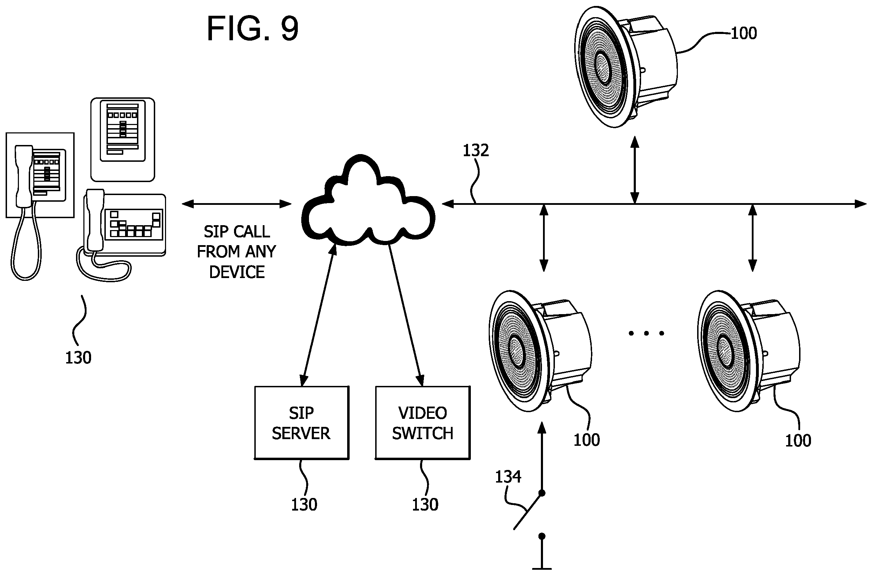

With reference to Fig. 9, a speaker 100 can be configured to operate with a talkback switch or similar device 134 in the vicinity of the speaker 100 which allows an IP device 130 to sense speaker engagements. The loudspeaker 214 (Fig. 6B) in the speaker 100 can operate as a microphone and user input audio to the speaker 100 is digitized and provided to the IP device 130 via IP communications. The input audio to the loudspeaker can also be ambient environment sound relative to the speaker 100 and therefore allowed mmbient level sensing or monitoring by the IP device 130 (e.g., to control speaker output level based on detected ambient noise).

Since the speaker 100 has a high bandwidth data pipe similar to other IP devices such as HUBBCOM^{™} IP devices, the speaker 100 can be provided with an add-on device 116 that comprises a camera for surveillance, in addition to the services provided by the speaker 100 such as public address and general alarms (PA/GA) and emergency announcements. With continued reference to Figs. 7, 8 and 9, a speaker can be provided with an optional add-on device 116 with a camera to allow camera output to be sent to the IP device so that an IP device 130 user can see and/or verbally communicate with a person in the vicinity of the speaker 100 in real-time.

With continued reference to Fig. 9, the speaker 100 can be connected to a remote device 134 such as a call button or panel to provide building entry and gate or door control. For example, the remote device 134 can be a button such as a SPST switch contact. When the device 134 is activated, the speaker can initiate its talkback function and operate the loudspeaker as a microphone and digitize and send inputted audio to the IP device(s) 130. Alternatively, an IP device 130 can send a control signal to the speaker 100 to operate the loudspeaker as a microphone (e.g., in response to a page)..

As stated above, different types of IP devices 130 can be used. For example, the afore-mentioned HUBBCOM^{™} IP devices are configured to provide one or more of web application control, VoIP SIP telephone operation, overhead speaker broadcasts, and point-to-point serverless IP communication (audio and/or video). HUBBCOM^{™} IP devices can also provide an audio output for powering an external speaker 100 for overhead paging and broadcasting, access control for door or gate, emergency audible and visual alerts (e.g., public address and general announcements (PA/GA)).

The speakers 100 and the IP device(s) 130 have IP connectivity for convenient integration into an existing network through standard Ethernet cables 132. For example, an IP device 130 can be connected to one or several speakers 100 via an Ethernet link 132 (e.g., cables) and then registered, for example, with a SIP server or IP-PBX. Alternatively, the speakers 100 can include control logic that allows serverless provisioning as described in commonly owned U.S. Patent No. 10051129. IP connectivity of the speaker(s) 100 with an IP device 130 is advantageous because multicast technology can be employed to enable multiple speakers 100 to listen on a given broadcast address to receive data over an Ethernet network from a single source such as an IP device 130.

Components on the control board 120 of the speaker 100 will now be described with reference to Figs. 6A and 6B. The control board 120 has an Ethernet connector 200 for connection to an Ethernet link (e.g., Ethernet cable) 132 between the speaker and an IP device 130 and an Ethernet interface 206. A processing device 202 and associated memory device(s) 204 are provided on the control board 120. The control board also has an audio codec 208 that provides audio output to a loudspeaker 214 (e.g., 8-Ohm) via a current-controlled limiter circuit 210 and speaker amplifier (e.g., 15-Watt) 212. A talkback amplifier 216 is provided to allow input audio via the loudspeaker cone. The processing device 202 is provided with control logic and configuration data for IP addressing and registration of the speaker 100 for communication with other IP devices, for control of the IP-based indicator(s) (e.g., LEDs) and optional camera(s) 218, and processing of input and output of audio with respect to other IP devices 130 and remote devices 134.

As stated above, the speaker 100 employs PoE/PoE+ power only; that is, no auxiliary power source is needed. PoE can be up to 6 watts, and variable via a configuration setting. PoE+ can be up to 15 watts, and variable via a configuration setting. The speaker 100 utilizes a speaker amplifier 212 rated for at least 15 watts into 8 ohms, and a current-controlled limiter circuit 210 to limit power to the speaker amplifier 212 as needed to support stable operation in PoE and PoE+ modes. The control board has PoE transformers 222, a PoE power supply 224 and current sense resistor 226 to provide +3.3V and 5VA via regulators 228 and 230. The processor has a power management section 232 that receives 3.3V from the regulator 228. The current-controlled limiter circuit 210 receives inputs CS+ and CS- from the current-sense resistor 210 and a POE/POE+ input from the PoE power supply 224.

The control board 120 has a camera indicated at the camera board interface 218. As described herein, a speaker can have an add-on device 116 with a camera 218 mounted in the center of the grill. The camera 218 can be rotatable relative to the add-on device 126 and/or housing 112 to orient camera coverage. For example, the add-on device 126 (Fig. 5) can be used instead of add-on device 124 (Fig. 4) when a user wishes to angle the camera lens toward the radius (e.g., outward) instead of straight down. The add-on device 116 can also be provided with a night vision-type camera. The current sense resistor 226 at the output of the PoE power supply 224 can provide +24V to a regulator 234 to provide +12VDC to an optional IR illuminator in the event the speaker 100 is provided with a night vision-appropriate camera. For example, an optional infrared (IR) LED and driver circuit can be provided to the speaker 100 via an add-on device 116 with the night vision-appropriate camera.

As stated above, the add-on device 122 can also be a cover or blank insert. As such, the speaker 100 is configured to accommodate a removable/replaceable camera and different camera types such as cameras with different camera lens types (e.g., wide-angle, fisheye, etc.). Speaker 100 is therefore versatile which is advantageous in installations wherein different types of add-on devices 116 are needed to provide different capabilities depending on speaker location and desired functions.

As stated above, the control board 120 has a talkback amplifier 216 to allow a half duplex talkback capability using the speaker cone of the loudspeaker 214. When the speaker 100 is not outputting audio, input audio is enabled for talkback function for a configurable time after no audio output activity. During a talkback mode, the loudspeaker 214 connections are fed back to a microphone input of the processing device 120's audio codec 208 such that the loudspeaker 214 is being used as a microphone during talkback mode. In addition, the processing device 120 allows the speaker 100 to be configured for remotely activated talkback using a remote device 134 (e.g., an external dry contact input 134 in Fig. 6A) connected to the speaker as illustrated in Fig. 9.

With continued reference to Figs. 6A and 6B, the control board 120 in the main housing 104 of the speaker 100 has an LED driver (200mA) 240 to drive an external LED indicator for such things as indicating status of the speaker 100 (e.g., active, powered) or to illuminate the area in its vicinity for egress of people. The processing device 202 can be provided with logic for local control (e.g., versus IP device 130 control) for activity indication, or remote control for alarms, etc. The LED driver 240 can act as a current source with a maximum current rating of 200 mA. The output current can be reduced from the 200 mA value using a PWM signal from the processing device 202. A heartbeat LED 244 and Ethernet LED(s) 246 can be driven by the processing device 202 to indicate that the speaker 100 has power and Ethernet connectivity. A bicolor LED driver 242 is provided to drive a common-cathode bicolor LED such as a red/green LED (e.g., whereby a third color (e.g., amber) can be produced if both LEDs are driven simultaneously) to provide an IP-based alarm LED 248 operated in accordance with control signals from an IP device 130, for example, to flash or illuminate a selected color to indicate a designated event to personnel within the vicinity of the speaker 100. As stated above, the speaker 100 can be provided with an add-on device 116 with night-vision appropriate camera, and therefore a possible need to drive an IR LED to allow night-vision with the appropriate camera. The regulator 234 can provide a +12VDC voltage source to power an external IR illuminator. The +12VDC voltage source can be switched on and off by the processing device 202 such as switched on at night and switched off during daytime.

The control board 120 has contact input to allow for talkback initiation from an external button (e.g., a call button switch or other device 134) operated by a user to activate the talkback function. For example, the processing device 202 can be provided with an external dry contact input 134. A relay 220 (e.g., small relay less than or equal to 2A DC) and contact output 250 allow activation of an external DC-powered device (e.g., to activate an E3 alarm). The processing device 202 can be provided with logic for local control (e.g., versus IP device 130 control) for activity indication (e.g., operate the alarm LED 248), or remote control for alarms, etc. The control board 120 can also have a processor module-controlled Form A (SPST) relay contact with a 30VDC/2A contact rating.

Ambient level sensing (ALS) and supervision via ambient noise as described above can be reported to E3 and/or SNMP systems. For example, output of the speaker is adjusted higher or lower to maintain a set level of output above sensed ambient level. A factory reset pushbutton 238 and MicroSD card connector 254 are also provided (e.g., for initial programming of the speaker 100).

The IP-based speaker 100 described herein in accordance with various example embodiments realizes a number of advantages. The IP-based speaker 100 takes advantage of the high bandwidth data pipe afforded the speaker 100 by virtue of its Ethernet connection to an IP device 130. The IP device 130 generally has a more powerful and higher quality and high cost amplifier for audio data sent to one or more IP-based speakers connected to it, allowing for a more cost effective amplifier to be used in each of the IP-based speakers and effectively lowering the unit cost of each IP-based speaker without degrading their sound quality. In addition, the high bandwidth data pipe allows for more data features and services to be provided by the IP-based speakers such as the use of different types of cameras and/or talkback features and/or remote relay control of doors or gates for security applications as well as public address applications.

It will be understood by one skilled in the art that this disclosure is not limited in its application to the details of construction and the arrangement of components set forth in the above description or illustrated in the drawings. The embodiments herein are capable of other embodiments, and capable of being practiced or carried out in various ways. Also, it will be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings. In addition, the terms "connected" and "coupled" and variations thereof are not restricted to physical or mechanical connections or couplings. Further, terms such as up, down, bottom, and top are relative, and are employed to aid illustration, but are not limiting.

The components of the illustrative devices, systems and methods employed in accordance with the illustrated embodiments can be implemented, at least in part, in digital electronic circuitry, analog electronic circuitry, or in computer hardware, firmware, software, or in combinations of them. These components can be implemented, for example, as a computer program product such as a computer program, program code or computer instructions tangibly embodied in an information carrier, or in a machine-readable storage device, for execution by, or to control the operation of, data processing apparatus such as a programmable processor, a computer, or multiple computers.

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network. Also, functional programs, codes, and code segments for accomplishing the illustrative embodiments can be easily construed as within the scope of claims exemplified by the illustrative embodiments by programmers skilled in the art to which the illustrative embodiments pertain. Method steps associated with the illustrative embodiments can be performed by one or more programmable processors executing a computer program, code or instructions to perform functions (e.g., by operating on input data and/or generating an output). Method steps can also be performed by, and apparatus of the illustrative embodiments can be implemented as, special purpose logic circuitry, e.g., an FPGA (field programmable gate array) or an ASIC (application-specific integrated circuit), for example.

The various illustrative logical blocks, modules, and circuits described in connection with the embodiments disclosed herein may be implemented or performed with a general purpose processor, a digital signal processor (DSP), an ASIC, a FPGA or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, e.g., electrically programmable read-only memory or ROM (EPROM), electrically erasable programmable ROM (EEPROM), flash memory devices, and data storage disks (e.g., magnetic disks, internal hard disks, or removable disks, magneto-optical disks, and CD-ROM and DVD-ROM disks). The processor and the memory can be supplemented by, or incorporated in special purpose logic circuitry.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of claims exemplified by the illustrative embodiments. A software module may reside in random access memory (RAM), flash memory, ROM, EPROM, EEPROM, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. In other words, the processor and the storage medium may reside in an integrated circuit or be implemented as discrete components.

Computer-readable non-transitory media includes all types of computer readable media, including magnetic storage media, optical storage media, flash media and solid state storage media. It should be understood that software can be installed in and sold with a central processing unit (CPU) device. Alternatively, the software can be obtained and loaded into the CPU device, including obtaining the software through physical medium or distribution system, including, for example, from a server owned by the software creator or from a server not owned but used by the software creator. The software can be stored on a server for distribution over the Internet, for example.

The above-presented description and figures are intended by way of example only and are not intended to limit the illustrative embodiments in any way except as set forth in the following claims.

## Claims

1. A speaker comprising:
a loudspeaker connected to a speaker amplifier;
a codec configured to provide audio to the speaker amplifier;
an Ethernet interface to an Ethernet link;
a camera;
a processing device connected to the Ethernet interface and the codec and the camera, and configured to associate the speaker with an Internet Protocol (IP) address;
a main housing having walls that enclose the loudspeaker, the codec, the Ethernet interface and the processing device except for a front side thereof; and
a detachable cover that covers the front side of the main housing when detachably affixed thereto;
wherein the main housing has a recess therein to receive an add-on device, and the cover has an opening through which the add-on device is inserted, the add-on device being detachably affixed to at least one of the main housing and the cover, the camera being provided in the add-on device and electrically connected to the processing device when the add-on device is affixed to at least one of the main housing and the cover; and
wherein the processing device is further configured to receive packets with the IP address from an IP device connected to the speaker via the Ethernet link and to transmit packets to the IP device via the Ethernet link, and output digitized audio in received packets via the loudspeaker, and to provide images from the camera to the IP device via transmitted packets.

2. The speaker of claim 1, wherein the IP device is chosen from a session initiation protocol (SIP) server, an IP endpoint device, and a video surveillance device, and an IP endpoint device is chosen from a Voice over IP (VoIP) phone and a Public Address and General Alarm System (PA/GA) controller.

3. The speaker of claim 1, wherein the speaker comprises at least one transformer and a power supply configured to supply power the speaker from the Ethernet link using at least one of using Power over the Ethernet (PoE) and PoE+.

4. The speaker of claim 1, further comprising at least one indicator that is visible to a user when the speaker is mounted to a surface, and is chosen from a light emitting diode (LED) and a bicolor LED and/or
wherein the processing device is configured to control the at least one indicator to indicate a connection status chosen from when the speaker is connected to the Ethernet link, and when speaker is not connected to the Ethernet link.

5. The speaker of claim 1, wherein the loudspeaker comprises:
a speaker cone configured to receive audio when not outputting audio, and the speaker is configured to operate in talkback mode wherein audio can be inputted via the speaker cone and the processing device is configured to control digitization and transmission of the inputted audio to the IP device; and/or a talkback switch input to the processing device, the processing device being configured to initiate the talkback mode in response to receiving the talkback switch input upon activation of a talkback switch.

6. The speaker of claim 1, wherein the processing device comprises at least one of a call button switch connected to an input thereof, and a relay connected to an output thereof, and is configured to operate an external device connected to the relay when a relay control output is generated by the processing device, and to initiate a talkback function when a user operates the call button switch.

7. The speaker of claim 1, further comprising a memory device configured to store audio files, the processing device configured to output at least one of the stored audio files via the loudspeaker in response to instructions received from the IP device identifying the at least one of the stored audio files for playback.

8. The speaker of claim 1, wherein the camera is night vision-type camera, and further comprising an infrared light emitting diode (LED) to provide illumination for the night vision-type camera; and/or
wherein the camera comprises an infrared (IR) camera and an automatically switchable IR filter to block IR and pass visible light when camera image quality is determined to meet criteria for day-time image capture operation, and to not block IR when camera image quality is determined to meet criteria for night-time image capture operation.

9. A speaker comprising:
a loudspeaker connected to a speaker amplifier;
a codec configured to provide audio to the speaker amplifier;
an Ethernet interface to an Ethernet link;
at least one indicator visible to a user when the speaker is mounted to a surface; and
a processing device connected to the Ethernet interface and the codec and
the indicator, and configured to associate the speaker with an Internet Protocol (IP) address; and
a main housing having walls that enclose the loudspeaker, the codec, the Ethernet interface and the processing device except for a front side thereof; and
a detachable cover that covers the front side of the main housing when detachably affixed thereto;
wherein the main housing has a recess therein to receive an add-on device, and the cover has an opening through which the add-on device is inserted, the add-on device being detachably affixed to at least one of the main housing and the cover, the at least one indicator being provided in the add-on device and electrically connected to the processing device when the add-on device is affixed to at least one of the main housing and the cover; and
wherein the processing device is further configured to receive packets with the IP address from an IP device connected to the speaker via the Ethernet link, and output digitized audio in the received packets via the loudspeaker, and operate the at least one indicator to generate the output to indicate a selected condition in accordance with indicator instructions in the received packets.

10. The speaker of claim 9, wherein the IP device is chosen from a session initiation protocol (SIP) server, an IP endpoint device, and a video surveillance device, and an IP endpoint device is chosen from a Voice over IP (VoIP) phone and a Public Address and General Alarm System (PA/GA) controller.

11. The speaker of claim 9, wherein the speaker comprises at least one transformer and a power supply configured to supply power the speaker from the Ethernet link using at least one of using Power over the Ethernet (PoE) and PoE+.

12. The speaker of claim 9, wherein the at least one indicator is chosen from a light emitting diode (LED) and a bicolor LED; and/or
the processing device is configured to control the at least one indicator to indicate a connection status chosen from when the speaker is connected to the Ethernet link, and when speaker is not connected to the Ethernet link.

13. The speaker of claim 9, wherein the loudspeaker comprises a speaker cone configured to receive audio when not outputting audio, and the speaker is configured to operate in talkback mode wherein audio can be inputted via the speaker cone and the processing device is configured to control digitization and transmission of the inputted audio to the IP device; and/or the speaker further comprising a talkback switch input to the processing device, the processing device being configured to initiate the talkback mode in response to receiving the talkback switch input upon activation of a talkback switch.

14. The speaker of claim 9, further comprising a camera, and a relay configured to operate a device connected to the relay in response to a relay control output generated by the processing device.

15. The speaker of claim 9, further comprising a memory device configured to store audio files, the processing device configured to output at least one of the stored audio files via the loudspeaker in response to instructions received from the IP device identifying the at least one of the stored audio files for playback.

16. The speaker of claim 9, wherein the cover has a grill comprising a pattern of apertures, and the add-on device comprises a second cover configured to cover the opening; and/or
wherein the second cover has a second grill comprising the pattern of apertures.

## Patentansprüche

1. Lautsprechervorrichtung, aufweisend:
einen Lautsprecher, welcher mit einem Lautsprecherverstärker verbunden ist;
einen Codec, welcher dazu eingerichtet ist, dem Lautsprecherverstärker Audio bereitzustellen;
eine Ethernet-Schnittstelle zu einer Ethernet-Verbindung;
eine Kamera;
eine Verarbeitungseinrichtung, welche mit der Ethernet-Schnittstelle und dem Codec und der Kamera verbunden und dazu eingerichtet ist, dem Lautsprechervorrichtung eine Internetprotokoll(IP)-Adresse zuzuordnen;
ein Hauptgehäuse mit Wänden, welche den Lautsprecher, den Codec, die Ethernet-Schnittstelle und die Verarbeitungseinrichtung mit Ausnahme einer Vorderseite des Hauptgehäuses umschließen; und
eine abnehmbare Abdeckung, welche die Vorderseite des Hauptgehäuses abdeckt, wenn sie daran lösbar befestigt ist;
wobei das Hauptgehäuse eine darin befindliche Ausnehmung zur Aufnahme einer Zusatzvorrichtung aufweist und die Abdeckung eine Öffnung aufweist, durch welche die Zusatzvorrichtung eingesetzt ist, wobei die Zusatzvorrichtung an mindestens einem von dem Hauptgehäuse und der Abdeckung lösbar befestigt ist, wobei die Kamera in der Zusatzvorrichtung vorgesehen und mit der Verarbeitungseinrichtung elektrisch verbunden ist, wenn die Zusatzvorrichtung an mindestens einem von dem Hauptgehäuse und der Abdeckung befestigt ist; und
wobei die Verarbeitungseinrichtung ferner dazu eingerichtet ist, Pakete mit der IP-Adresse von einer IP-Vorrichtung zu empfangen, welche über die Ethernet-Verbindung mit dem Lautsprechervorrichtung verbunden ist, und Pakete über die Ethernet-Verbindung an die IP-Vorrichtung zu übertragen und digitalisiertes Audio in empfangenen Paketen über den Lautsprecher auszugeben und der IP-Vorrichtung Bilder von der Kamera mittels übertragene Pakete bereitzustellen.

2. Lautsprechervorrichtung nach Anspruch 1, wobei die IP-Vorrichtung aus einem Session-Initiation-Protocol(SIP)-Server, einer IP-Endpunktvorrichtung und einer Videoüberwachungsvorrichtung ausgewählt ist und eine IP-Endpunktvorrichtung aus einem Voice-over-IP(VoIP)-Telefon und einer Steuerung für ein Beschallungs- und Generalalarmsystem (PA/GA) ausgewählt ist.

3. Lautsprechervorrichtung nach Anspruch 1, wobei das Lautsprechervorrichtung mindestens einen Transformator und eine Stromversorgung aufweist, welche dazu eingerichtet ist, das Lautsprechervorrichtung aus der Ethernet-Verbindung unter Verwendung mindestens eines von Power over the Ethernet (PoE) und PoE+ mit Strom zu versorgen.

4. Lautsprechervorrichtung nach Anspruch 1, ferner aufweisend mindestens ein Anzeigeelement, welches für einen Benutzer sichtbar ist, wenn das Lautsprechervorrichtung an einer Oberfläche montiert ist, und aus einer Leuchtdiode (LED) und einer zweifarbigen LED ausgewählt ist, und/oder
wobei die Verarbeitungseinrichtung dazu eingerichtet ist, das mindestens eine Anzeigeelement anzusteuern, um einen Verbindungsstatus anzuzeigen, welcher daraus ausgewählt ist, dass das Lautsprechervorrichtung mit der Ethernet-Verbindung verbunden ist, und dass das Lautsprechervorrichtung nicht mit der Ethernet-Verbindung verbunden ist.

5. Lautsprechervorrichtung nach Anspruch 1, wobei der Lautsprecher aufweist:
einen Lautsprecherkonus, welcher dazu eingerichtet ist, Audio zu empfangen, wenn er kein Audio ausgibt, und wobei das Lautsprechervorrichtung dazu eingerichtet ist, in einem Rücksprechmodus zu arbeiten, in welchem Audio über den Lautsprecherkonus eingegeben werden kann und die Verarbeitungseinrichtung dazu eingerichtet ist, die Digitalisierung und Übertragung des eingegebenen Audios an die IP-Vorrichtung zu steuern; und/oder
eine Rücksprechschaltereingabe zu der Verarbeitungseinrichtung, wobei die Verarbeitungseinrichtung dazu eingerichtet ist, den Rücksprechmodus als Reaktion auf den Empfang der Rücksprechschaltereingabe bei Betätigung eines Rücksprechschalters einzuleiten.

6. Lautsprechervorrichtung nach Anspruch 1, wobei die Verarbeitungseinrichtung mindestens eines von einem Ruftastenschalter, welcher mit einem Eingang derselben verbunden ist, und einem Relais, welches mit einem Ausgang derselben verbunden ist, aufweist und dazu eingerichtet ist, eine mit dem Relais verbundene externe Vorrichtung zu betreiben, wenn eine Relaissteuerausgabe durch die Verarbeitungseinrichtung erzeugt wird, und eine Rücksprechfunktion einzuleiten, wenn ein Benutzer den Ruftastenschalter betätigt.

7. Lautsprechervorrichtung nach Anspruch 1, ferner aufweisend eine Speichereinrichtung, welche dazu eingerichtet ist, Audiodateien zu speichern, wobei die Verarbeitungseinrichtung dazu eingerichtet ist, mindestens eine der gespeicherten Audiodateien über den Lautsprecher als Reaktion auf von der IP-Vorrichtung empfangene Anweisungen auszugeben, welche die mindestens eine der gespeicherten Audiodateien zur Wiedergabe identifizieren.

8. Lautsprechervorrichtung nach Anspruch 1, wobei die Kamera eine Nachtsichtkamera ist, und ferner aufweisend eine Infrarot-Leuchtdiode (LED), um eine Beleuchtung für die Nachtsichtkamera bereitzustellen; und/oder
wobei die Kamera eine Infrarot(IR)-Kamera und einen automatisch umschaltbaren IR-Filter aufweist, um IR-Strahlung zu blockieren und sichtbares Licht durchzulassen, wenn festgestellt wird, dass die Kamerabildqualität Kriterien für einen Bildaufnahmebetrieb bei Tag erfüllt, und um IR-Strahlung nicht zu blockieren, wenn festgestellt wird, dass die Kamerabildqualität Kriterien für einen Bildaufnahmebetrieb bei Nacht erfüllt.

9. Lautsprechervorrichtung, aufweisend:
einen Lautsprecher, welcher mit einem Lautsprecherverstärker verbunden ist;
einen Codec, welcher dazu eingerichtet ist, dem Lautsprecherverstärker Audio bereitzustellen;
eine Ethernet-Schnittstelle zu einer Ethernet-Verbindung;
mindestens ein Anzeigeelement, welches für einen Benutzer sichtbar ist, wenn das Lautsprechervorrichtung an einer Oberfläche montiert ist; und
eine Verarbeitungseinrichtung, welche mit der Ethernet-Schnittstelle und dem Codec und dem Anzeigeelement verbunden und dazu eingerichtet ist, dem Lautsprechervorrichtung eine Internetprotokoll(IP)-Adresse zuzuordnen; und
ein Hauptgehäuse mit Wänden, welche den Lautsprecher, den Codec, die Ethernet-Schnittstelle und die Verarbeitungseinrichtung mit Ausnahme einer Vorderseite des Hauptgehäuses umschließen; und
eine abnehmbare Abdeckung, welche die Vorderseite des Hauptgehäuses abdeckt, wenn sie daran lösbar befestigt ist;
wobei das Hauptgehäuse eine darin befindliche Ausnehmung zur Aufnahme einer Zusatzvorrichtung aufweist und die Abdeckung eine Öffnung aufweist, durch welche die Zusatzvorrichtung eingesetzt ist, wobei die Zusatzvorrichtung an mindestens einem von dem Hauptgehäuse und der Abdeckung lösbar befestigt ist, wobei das mindestens eine Anzeigeelement in der Zusatzvorrichtung vorgesehen und mit der Verarbeitungseinrichtung elektrisch verbunden ist, wenn die Zusatzvorrichtung an mindestens einem von dem Hauptgehäuse und der Abdeckung befestigt ist; und
wobei die Verarbeitungseinrichtung ferner dazu eingerichtet ist, Pakete mit der IP-Adresse von einer IP-Vorrichtung zu empfangen, welche über die Ethernet-Verbindung mit dem Lautsprechervorrichtung verbunden ist, und digitalisiertes Audio in den empfangenen Paketen über den Lautsprecher auszugeben und das mindestens eine Anzeigeelement zu betreiben, um die Ausgabe zu erzeugen, um einen ausgewählten Zustand gemäß Anzeigeanweisungen in den empfangenen Paketen anzuzeigen.

10. Lautsprechervorrichtung nach Anspruch 9, wobei die IP-Vorrichtung aus einem Session-Initiation-Protocol(SIP)-Server, einer IP-Endpunktvorrichtung und einer Videoüberwachungsvorrichtung ausgewählt ist und eine IP-Endpunktvorrichtung aus einem Voice-over-IP(VoIP)-Telefon und einer Steuerung für ein Beschallungs- und Generalalarmsystem (PA/GA) ausgewählt ist.

11. Lautsprechervorrichtung nach Anspruch 9, wobei das Lautsprechervorrichtung mindestens einen Transformator und eine Stromversorgung aufweist, welche dazu eingerichtet ist, das Lautsprechervorrichtung aus der Ethernet-Verbindung unter Verwendung mindestens eines von Power over the Ethernet (PoE) und PoE+ mit Strom zu versorgen.

12. Lautsprechervorrichtung nach Anspruch 9, wobei das mindestens eine Anzeigeelement aus einer Leuchtdiode (LED) und einer zweifarbigen LED ausgewählt ist; und/oder
die Verarbeitungseinrichtung dazu eingerichtet ist, das mindestens eine Anzeigeelement anzusteuern, um einen Verbindungsstatus anzuzeigen, welcher daraus ausgewählt ist, dass das Lautsprechervorrichtung mit der Ethernet-Verbindung verbunden ist, und dass das Lautsprechervorrichtung nicht mit der Ethernet-Verbindung verbunden ist.

13. Lautsprechervorrichtung nach Anspruch 9, wobei der Lautsprecher einen Lautsprecherkonus aufweist, welcher dazu eingerichtet ist, Audio zu empfangen, wenn er kein Audio ausgibt, und wobei das Lautsprechervorrichtung dazu eingerichtet ist, in einem Rücksprechmodus zu arbeiten, in welchem Audio über den Lautsprecherkonus eingegeben werden kann und die Verarbeitungseinrichtung dazu eingerichtet ist, die Digitalisierung und Übertragung des eingegebenen Audios an die IP-Vorrichtung zu steuern; und/oder
wobei das Lautsprechervorrichtung ferner eine Rücksprechschaltereingabe zu der Verarbeitungseinrichtung aufweist, wobei die Verarbeitungseinrichtung dazu eingerichtet ist, den Rücksprechmodus als Reaktion auf den Empfang der Rücksprechschaltereingabe bei Betätigung eines Rücksprechschalters einzuleiten.

14. Lautsprechervorrichtung nach Anspruch 9, ferner aufweisend eine Kamera
und ein Relais, welches dazu eingerichtet ist, eine mit dem Relais verbundene Vorrichtung als Reaktion auf eine durch die Verarbeitungseinrichtung erzeugte Relaissteuerausgabe zu betreiben.

15. Lautsprechervorrichtung nach Anspruch 9, ferner aufweisend eine Speicher-
einrichtung, welche dazu eingerichtet ist, Audiodateien zu speichern, wobei die Verarbeitungseinrichtung dazu eingerichtet ist, mindestens eine der gespeicherten Audiodateien über den Lautsprecher als Reaktion auf von der IP-Vorrichtung empfangene Anweisungen auszugeben, welche die mindestens eine der gespeicherten Audiodateien zur Wiedergabe identifizieren.

16. Lautsprechervorrichtung nach Anspruch 9, wobei die Abdeckung ein Gitter aufweist, welches ein Muster von Durchbrechungen aufweist, und die Zusatzvorrichtung eine zweite Abdeckung aufweist, welche dazu eingerichtet ist, die Öffnung abzudecken; und/oder
wobei die zweite Abdeckung ein zweites Gitter aufweist, welches das Muster von Durchbrechungen aufweist.

## Revendications

1. Haut-parleur comprenant :
un haut-parleur connecté à un amplificateur de haut-parleur ;
un codec configuré pour fournir de l'audio à l'amplificateur de haut-parleur ;
une interface Ethernet vers une liaison Ethernet ;
une caméra ;
un dispositif de traitement connecté à l'interface Ethernet et au codec et à la caméra, et configuré pour associer le haut-parleur à une adresse de protocole internet (IP) ; un boîtier principal ayant des parois qui renferment le haut-parleur, le codec, l'interface Ethernet et le dispositif de traitement à l'exception d'un côté avant de celui-ci ; et
un couvercle détachable qui recouvre le côté avant du boîtier principal lorsqu'il y est apposé de manière détachable ;
dans lequel le boîtier principal a un évidement dans celui-ci pour recevoir un dispositif complémentaire, et le couvercle a une ouverture à travers laquelle le dispositif complémentaire est inséré, le dispositif complémentaire étant apposé de manière détachable à au moins l'un du boîtier principal et du couvercle, la caméra étant prévue dans le dispositif complémentaire et connectée électriquement au dispositif de traitement lorsque le dispositif complémentaire est apposé à au moins l'un du boîtier principal et du couvercle ; et
dans lequel le dispositif de traitement est en outre configuré pour recevoir des paquets avec l'adresse IP d'un dispositif IP connecté au haut-parleur par l'intermédiaire de la liaison Ethernet et pour transmettre des paquets au dispositif IP par l'intermédiaire de la liaison Ethernet, et sortir de l'audio numérisé dans des paquets reçus par l'intermédiaire du haut-parleur, et pour fournir des images de la caméra au dispositif IP par l'intermédiaire de paquets transmis.

2. Haut-parleur selon la revendication 1, dans lequel le dispositif IP est choisi parmi un serveur de protocole d'initiation de session (SIP), un dispositif de point d'extrémité IP, et un dispositif de vidéosurveillance, et un dispositif de point d'extrémité IP est choisi parmi un téléphone voix sur IP (VoIP) et un dispositif de commande de système de sonorisation et d'alarme générale (PA/GA).

3. Haut-parleur selon la revendication 1, dans lequel le haut-parleur comprend au moins un transformateur et une alimentation électrique configurée pour alimenter en énergie le haut-parleur à partir de la liaison Ethernet en utilisant au moins l'un de l'alimentation électrique par câble Ethernet (PoE) et du PoE+.

4. Haut-parleur selon la revendication 1, comprenant en outre au moins un indicateur qui est visible pour un utilisateur lorsque le haut-parleur est monté sur une surface, et est choisi parmi une diode électroluminescente (DEL) et une DEL bicolore et/ou
dans lequel le dispositif de traitement est configuré pour commander l'au moins un indicateur pour indiquer un état de connexion choisi parmi lorsque le haut-parleur est connecté à la liaison Ethernet, et lorsque le haut-parleur n'est pas connecté à la liaison Ethernet.

5. Haut-parleur selon la revendication 1, dans lequel le haut-parleur comprend : un cône de haut-parleur configuré pour recevoir de l'audio lorsqu'il ne sort pas de l'audio, et le haut-parleur est configuré pour fonctionner dans un mode d'interphonie dans lequel de l'audio peut être entré par l'intermédiaire du cône de haut-parleur et le dispositif de traitement est configuré pour commander la numérisation et la transmission de l'audio entré au dispositif IP ; et/ou une entrée de commutateur d'interphonie vers le dispositif de traitement, le dispositif de traitement étant configuré pour initier le mode d'interphonie en réponse à la réception de l'entrée de commutateur d'interphonie lors de l'activation d'un commutateur d'interphonie.

6. Haut-parleur selon la revendication 1, dans lequel le dispositif de traitement comprend au moins un d'un commutateur de bouton d'appel connecté à une entrée de celui-ci, et d'un relais connecté à une sortie de celui-ci, et est configuré pour faire fonctionner un dispositif externe connecté au relais lorsqu'une sortie de commande de relais est générée par le dispositif de traitement, et pour initier une fonction d'interphonie lorsqu'un utilisateur actionne le commutateur de bouton d'appel.

7. Haut-parleur selon la revendication 1, comprenant en outre un dispositif de mémoire configuré pour stocker des fichiers audio, le dispositif de traitement configuré pour sortir au moins l'un des fichiers audio stockés par l'intermédiaire du haut-parleur en réponse à des instructions reçues du dispositif IP identifiant l'au moins un des fichiers audio stockés pour la lecture.

8. Haut-parleur selon la revendication 1, dans lequel la caméra est une caméra de type vision nocturne, et comprenant en outre une diode électroluminescente (DEL) infrarouge pour fournir un éclairage pour la caméra de type vision nocturne ; et/ou dans lequel la caméra comprend une caméra infrarouge (IR) et un filtre IR commutable automatiquement pour bloquer les IR et laisser passer la lumière visible lorsque la qualité d'image de la caméra est déterminée comme satisfaisant à des critères pour une opération de capture d'image de jour, et pour ne pas bloquer les IR lorsque la qualité d'image de la caméra est déterminée comme satisfaisant à des critères pour une opération de capture d'image de nuit.

9. Haut-parleur comprenant :
un haut-parleur connecté à un amplificateur de haut-parleur ;
un codec configuré pour fournir de l'audio à l'amplificateur de haut-parleur ;
une interface Ethernet vers une liaison Ethernet ;
au moins un indicateur visible pour un utilisateur lorsque le haut-parleur est monté sur une surface ; et
un dispositif de traitement connecté à l'interface Ethernet et au codec et à l'indicateur, et configuré pour associer le haut-parleur à une adresse de protocole internet (IP) ; et un boîtier principal ayant des parois qui renferment le haut-parleur, le codec, l'interface Ethernet et le dispositif de traitement à l'exception d'un côté avant de celui-ci ; et
un couvercle détachable qui recouvre le côté avant du boîtier principal lorsqu'il y est apposé de manière détachable ;
dans lequel le boîtier principal a un évidement dans celui-ci pour recevoir un dispositif complémentaire, et le couvercle a une ouverture à travers laquelle le dispositif complémentaire est inséré, le dispositif complémentaire étant apposé de manière détachable à au moins l'un du boîtier principal et du couvercle, l'au moins un indicateur étant prévu dans le dispositif complémentaire et connecté électriquement au dispositif de traitement lorsque le dispositif complémentaire est apposé à au moins l'un du boîtier principal et du couvercle ; et
dans lequel le dispositif de traitement est en outre configuré pour recevoir des paquets avec l'adresse IP d'un dispositif IP connecté au haut-parleur par l'intermédiaire de la liaison Ethernet,
et sortir de l'audio numérisé dans les paquets reçus par l'intermédiaire du haut-parleur, et faire fonctionner l'au moins un indicateur pour générer la sortie pour indiquer une condition sélectionnée conformément à des instructions d'indicateur dans les paquets reçus.

10. Haut-parleur selon la revendication 9, dans lequel le dispositif IP est choisi parmi un serveur de protocole d'initiation de session (SIP), un dispositif de point d'extrémité IP, et un dispositif de vidéosurveillance, et un dispositif de point d'extrémité IP est choisi parmi un téléphone voix sur IP (VoIP) et un dispositif de commande de système de sonorisation et d'alarme générale (PA/GA).

11. Haut-parleur selon la revendication 9, dans lequel le haut-parleur comprend au moins un transformateur et une alimentation électrique configurée pour alimenter en énergie le haut-parleur à partir de la liaison Ethernet en utilisant au moins l'un de l'alimentation électrique par câble Ethernet (PoE) et du PoE+.

12. Haut-parleur selon la revendication 9, dans lequel l'au moins un indicateur est choisi parmi une diode électroluminescente (DEL) et une DEL bicolore ; et/ou le dispositif de traitement est configuré pour commander l'au moins un indicateur pour indiquer un état de connexion choisi parmi lorsque le haut-parleur est connecté à la liaison Ethernet, et lorsque le haut-parleur n'est pas connecté à la liaison Ethernet.

13. Haut-parleur selon la revendication 9, dans lequel le haut-parleur comprend un cône de haut-parleur configuré pour recevoir de l'audio lorsqu'il ne sort pas de l'audio, et le haut-parleur est configuré pour fonctionner dans un mode d'interphonie dans lequel de l'audio peut être entré par l'intermédiaire du cône de haut-parleur et le dispositif de traitement est configuré pour commander la numérisation et la transmission de l'audio entré au dispositif IP ; et/ou
le haut-parleur comprenant en outre une entrée de commutateur d'interphonie vers le dispositif de traitement, le dispositif de traitement étant configuré pour initier le mode d'interphonie en réponse à la réception de l'entrée de commutateur d'interphonie lors de l'activation d'un commutateur d'interphonie.

14. Haut-parleur selon la revendication 9, comprenant en outre une caméra, et un relais configuré pour faire fonctionner un dispositif connecté au relais en réponse à une sortie de commande de relais générée par le dispositif de traitement.

15. Haut-parleur selon la revendication 9, comprenant en outre un dispositif de mémoire configuré pour stocker des fichiers audio, le dispositif de traitement configuré pour sortir au moins un des fichiers audio stockés par l'intermédiaire du haut-parleur en réponse à des instructions reçues du dispositif IP identifiant l'au moins un des fichiers audio stockés pour la lecture.

16. Haut-parleur selon la revendication 9, dans lequel le couvercle a une grille comprenant un motif d'ouvertures, et le dispositif complémentaire comprend un second couvercle configuré pour recouvrir l'ouverture ; et/ou
dans lequel le second couvercle a une seconde grille comprenant le motif d'ouvertures.
